# EUROPEAN PATENT SPECIFICATION

(11) **EP 3 136 649 B1**
(45) Date of publication and mention of the grant of the patent: **14.03.2018**
(21) Application number: 15306319.3
(22) Date of filing: 27.08.2015
(51) Int. Cl.: H04L 12/24, H04L 12/721, H04L 12/751

(54) **METHOD AND SYSTEM FOR PROVIDING LOAD INFORMATION OF AN OPTICAL DATA TRANSMISSION SYSTEM**
VERFAHREN UND SYSTEM ZUR BEREITSTELLUNG VON LASTINFORMATIONEN EINES OPTISCHEN DATENÜBERTRAGUNGSSYSTEMS
PROCÉDÉ ET SYSTÈME POUR FOURNIR DES INFORMATIONS DE CHARGE D'UN SYSTÈME DE TRANSMISSION OPTIQUE DE DONNÉES

(43) Date of publication of application: 01.03.2017
(73) Proprietor: ALCATEL LUCENT, 92100 Boulogne-Billancourt (FR)
(72) Inventor: ILCHMANN, Frank, 70435 Stuttgart (DE)
(74) Representative: Wetzel, Emmanuelle

(56) References cited:
- EP-A1- 2 058 986
- WO-A1-2007/016942
- WO-A1-2011/072710
- AKBAR GHAFFARPOUR RAHBAR: "Review of Dynamic Impairment-Aware Routing and Wavelength Assignment Techniques in All-Optical Wavelength-Routed Networks", IEEE COMMUNICATIONS SURVEYS AND TUTORIALS, INSTITUTE OF ELECTRICAL AND ELECTRONICS ENGINEERS, US, vol. 14, no. 4, 1 October 2012 (2012-10-01), pages 1065-1089, XP011471437, ISSN: 1553-877X, DOI: 10.1109/SURV.2011.101911.00023

## Description

The present document relates to optical data transmission systems. In particular, the present document relates to a method for providing load information of optical nodes included in an optical data transmission system.

Deployed optical transport networks have to handle different classes of light path demands: Static and dynamic demands. Static (or permanent) demands are pre-known connection requests, which can be preplanned using off-line planning tools. Dynamic (or random) demands, in the following also referred to as dynamic transmission requests, are not predictable demands from point of view of network planning, because time of arrival and the lifetime of the demand is not known in advance. Dynamic provisioning of light paths is appropriate for bandwidth-on-demand services (e.g. for temporary connections between datacenters). However, pre-planning in dynamic optical networks is complicated, because the capacity utilization by light path changes over time. A typical objective in such dynamically operated networks would be to minimize the number of blocked (rejected) transmission requests because of limited network resources (e.g. optical switch interfaces, optical fiber spectrum). To fulfill as many dynamic transmission requests as possible, fast on-demand path provisioning is required, which may also include feasible rerouting of existing optical links.

Nevertheless, the operator of such network needs advice, how potential transmission requests will influence the near-future resource utilization of his network. There is currently no metric available, which indicates how costly (in terms of resource utilization or service rerouting) the realization of a dynamic light path demand will be.

Today, the network planning problem is solved using an off-line network planning tool which tries to dimension and optimize the entire static network. But the results of this method are not very meaningful because the current state of the deployed network and also dynamic transmission requests cannot be taken into account appropriately.

The following documents are prior art examples of optical networks wherein information concerning the topology and status of the network, including the utilization and availability of resources, is collected, wherein said information is used to deal with dynamic connection requests and is periodically updated, and wherein some metric or cost of the optical links is taken into consideration in order to implement an arrived connection request; patent applications WO 2007/016942 A1, EP 2 058 986 A1, WO 2011/072710 A1, and the paper "Review of Dynamic Impairment-Aware Routing and Wavelength Assignment Techniques in All-Optical Wavelength-Routed Networks", by A.G. Rahbar (IEEE Communications Surveys and Tutorials, vol.14, no.4, 2012).

It is an objective of the present disclosure to point out a method and system for providing load information of an optical transmission system which informs a network planner or network management entity about network bottlenecks which specifically occur due to fulfilling dynamic transmission demands.
According to a first aspect, a method for providing load information of an optical data transmission system is provided. The system may include an optical transmission network comprising nodes and optical links. First, information regarding the current state of the optical data transmission network including network topology information and information regarding currently established optical transmission links is received. In other words, said information may reflect the present configuration of the optical data transmission network (e.g. the possible transmission paths, their transmission capacity etc.) and the optical transmission capacities (e.g. optical fibers, wavelength channels etc.) currently occupied in said optical data transmission network. For example, said information may be provided by a SDN-(software-defined networking)-controller or another network entity/entities having access to said information.

Based on the information regarding the current state of the optical data transmission network, network connections for which a potential transmission request may be received are identified. More in detail, the optical data transmission network may comprise multiple network nodes, and for each pair of network nodes a potential transmission request for establishing an optical transmission link therein between may be received. Based on said identified network connections, a list or matrix may be established including all potential transmission requests. Multiple lists or matrixes may be established for different transmission classes, e.g. capacities (e.g. 2.5 Gb/s, 10 Gb/s, 100 Gb/s etc.) for which transmission requests may be received. The wording "potential transmission request" according to the present disclosure means that the transmission request may occur hypothetically in the future, i.e. with a certain probability greater than zero. A corresponding actual transmission request does not have been received before.

After investigating all possible network connections, based on the information regarding the current state of the optical data transmission network, optical transmission link information for each identified network connection may be pre-calculated, i.e. the calculation is performed before actually receiving a transmission request for such optical transmission link. Said optical transmission link information may include at least transmission path information indicating the route through the optical data transmission network and optionally used resources such as wavelength information indicating the wavelength or optical channel (e.g. WDM channel) which is used for establishing the optical transmission link.

Said pre-calculated optical transmission link information may be stored, for example in a database in order to have said information available for further processing. The optical transmission link information may be stored in association with the network connection or transmission request to which the optical transmission link information refers to.

Based on said pre-calculated optical transmission link information, for each potential transmission request related to a certain network connection, a link-based cost-of-change metric may be established. The link-based cost-of change metric is indicative for the resource utilization (e.g. occupied transmission channels) in the optical data transmission network caused by the respective potential transmission request (resource utilization of a hypothetically occurring transmission demand) and the resource utilization (e.g. occupied transmission channels) of already established optical transmission links. The term "link-based" in the present context means that the resource utilization along the optical transmission link associated with the hypothetically occurring transmission demand is determined.

Following up, said link-based cost-of-change metric may be transformed in a node-based cost-of-change metric, said node-based cost-of-change metric indicating how costly the realization of an arriving dynamic transmission request in the optical data transmission network with current usage would be. Said transformation may be obtained by accumulating the established link-based cost-of-change metrics. The node-based cost-of-change metric is indicative for the load of the optical nodes of the optical data transmission network by the actual network allocation and the hypothetically arriving future transmission requests.

Finally, load information may be provided based on the node-based cost-of-change metric, said load information indicating the potential load of the nodes of the optical data transmission network considering all potential transmission requests (as well as load caused by already implemented optical data transmissions).

Said method is advantageous because the generated node-based cost-of-change metric reflects the current load of the optical data transmission network more effectively. In addition, current network management and network control systems do not provide any metric indicating how costly (in terms of resource utilization and service rerouting) the realization of a dynamic transmission request may be. Based on the suggested node-based cost-of-change metric, costs for potential dynamic transmission requests may be estimated.

According to an embodiment, the pre-calculation of optical transmission link information for each identified network connection is performed separately for each transmission capacity provided in the optical data transmission network. For example, the optical data transmission network may provide multiple transmission capacity classes, e.g. 2.5 Gb/s, 10 Gb/s, 100 Gb/s etc. For each of said capacity classes, different optical transmission link information may be pre-calculated because transmission requests for a first capacity class may lead to another optical transmission link information (i.e. are transmitted on another route/ use other wavelength channels or resources) than transmission requests referring to a second capacity class.

According to embodiments, the pre-calculation of optical transmission link information for each identified network connection determines the shortest optical transmission path for establishing the network connection. So in other words, the routing algorithm will suggest an optical transmission link via a transmission path with the lowest cost such as the shortest length between the source and destination node. According to another embodiment, the routing algorithm may be adapted to find an optimum between the length of the transmission path and the occupied capacity on the suggested transmission link.

According to embodiments, the pre-calculation of optical transmission link information for each identified network connection is performed using a first-fit or best-fit wavelength assignment algorithm. The term "first-fit wavelength assignment" means that the wavelength assignment algorithm chooses the first free wavelength for establishing the optical transmission link (considering a WDM system with multiple wavelength-separated channels). The term "best-fit wavelength assignment" means that the wavelength assignment algorithm chooses a free wavelength which causes the lowest costs.

According to embodiments, a reconfiguration of an already established optical transmission link is performed if a pre-calculated optical transmission link is not available due to limited network resources. So, if the routing algorithm indicates in a first step that there are no free transmission resources for establishing a transmission link according to the transmission request, in a second step, a re-routing routine may be triggered which tries to re-route already existing transmissions such that the rejected transmission request can be handled using freed capacities. It is worth mentioning that the method may preferably try to avoid wavelength changes along the transmission links, i.e. the wavelength continuity constraint should be fulfilled. However, according to other embodiments, also wavelength conversions within the transmission link may be used to avoid capacity bottlenecks.

According to embodiments, information regarding the reconfiguration or rerouting of an already established optical transmission link is stored in association with the pre-calculated optical transmission link information. Said reconfiguration or rerouting may cause considerable effort which may be considered when establishing the cost-of-change metric. Therefore, by storing reconfiguration or rerouting information it is possible to take said information into account when calculating the cost-of-change metric.

According to embodiments, information that no optical transmission link is available for a certain transmission request (blocked transmission request) is stored in association with the identified network connection corresponding to said transmission request. Thereby also information regarding a rejected transmission request may be taken into account when calculating the cost-of-change metric.

According to embodiments, the link-based cost-of-change metric is established by summing up the number of optical transmission links transmitted in each optical transmission path section along the pre-calculated optical transmission path, thereby deriving a link-based cost-of-change value. More in detail, each transmission link may extent over one or more optical transmission path sections (network section between two adjacent nodes). Each transmission path section may provide transmission resources for a certain number of transmission channels, each transmission channel being associated with a certain optical transmission link. The link-based cost-of-change metric may be calculated by adding all occupied (busy) transmission channels of each optical transmission path section along the pre-calculated optical transmission path. In other words, the link-based cost-of-change value is derived by determining the number of occupied transmission channels in each optical transmission path section and accumulating said numbers of occupied transmission channels along the pre-calculated optical transmission path.

According to embodiments, the link-based cost-of-change metric is established by adding the number of optical transmission links transmitted in each optical transmission path section along an alternative transmission path to the link-based cost-of-change value, the alternative transmission path being the path through which an already established optical transmission link is rerouted. So, not only the direct resources needed for establishing a certain optical transmission link but also the resources for rerouting of already existing transmissions are considered in the link-based cost-of-change metric.

According to embodiments, the node-based cost-of-change metric associated with a certain node is derived by summing up the link-based cost-of-change values established for all potential transmission requests which have said node as source node or destination node. For example, in a loop all nodes are processed successively. At each node all starting or ending potential transmission requests may be processed and their link-based cost-of-change values are accumulated. The information about start and end nodes of the transmission requests is provided e.g. by the SDN controller. The accumulation of the link-based cost-of-change values at each node is comparable with planning the required add/drop capacity of the nodes. Usual in static network planning is the accumulation of number of interfaces at the client side and interfaces towards the links. The accumulation of the link-based cost-of-change values can be understood as projection of potentially required node capacities.

In other words, resource information required along transmission paths starting or ending at a certain node are mapped into said node.

Said metric conversion or mapping provides multiple advantages. First, all considerations are related to end-to-end transmission requests that exist between any two nodes of the network. The nodes are not necessarily adjacent, i.e. they are not necessarily joined by a link (link without any intermediate nodes). From point of view of a network operator it is necessary to know the cost of the implementation of a new end-to-end request (independent from the links between the end nodes. Second, especially in the SDN context it may be possible that the network operator shares his knowledge about the cost of change of new transmission requests with its tenants. But the operator wants to hide details of the network topology from its tenants. In fact, the tenant recognizes the node-based cost-of-change metric in the graphical representation, but has no information about the links between the network nodes. It is also possible, that the tenant gets only node-based cost-of-change metric about nodes of his network slice. For this purpose the operator of the network accumulates the node-based cost-of-change metric per tenant in a way that only transmission requests within the network slice of the tenant will be taken into account.

According to embodiments, a weighted accumulation of the link-based cost-of-change values is performed in order to obtain a node-based cost-of-change metric. Preferably, the weighting is performed according to the frequency of usage of the respective transmission links. For example, for each potential transmission request / transmission link, frequency of usage information may be stored in a database. Thereby it is possible to provide more frequently used transmission links a higher weight than less frequently used transmission links which leads to an overweighting of frequently used transmission links when establishing the cost-of-change metric.

According to embodiments, the load information is provided as graphical information on a graphical user interface to an operator in order to support network planning. For example, the load of the respective nodes may be presented by any graphical means, e.g. size or color of the node or any other graphical highlighting means. Thereby, an operator may recognize capacity bottlenecks and may plan network development or further transmission requests based on said information.

According to embodiments, the load information is provided to a network management entity in order to process transmission requests based on said load information. For example, the management entity may set up new transmission links based on cost-of-change metric information.

According to embodiments, the optical data transmission network is managed by a SDN controller, wherein the SDN controller performs setting up a requested optical transmission link by using said stored pre-calculated optical transmission link information. So, in case of an arrival of a new transmission request, optical transmission link information (which route and/or wavelength should be chosen) has not to be calculated just-in-time but the pre-calculated optical transmission link information may be chosen for establishing the optical transmission link.

According to embodiments, the optical data transmission network is managed by a SDN controller, wherein the SDN controller triggers a recalculation of the load information in case that one or more optical transmission links provided within the optical data transmission network have changed. Similarly, the SDN controller may trigger the recalculation of the load information if there is a change of the network topology (added or removed transmission paths, transmission capacity changes etc.).

According to a further aspect, a system or device for providing load information of an optical data transmission system is disclosed. The system may comprise an interface for receiving information regarding the current state of the optical data transmission network including network topology information and information regarding currently established optical transmission links. Processing means for identifying all network connections for which a potential transmission request may be received may be provided. The system may comprise processing means for pre-calculating, preferably before receiving a transmission request and based on the information regarding the current state of the optical data transmission network, optical transmission link information for each identified network connection, said optical transmission link information at least including optical path information and optionally wavelength information. Further, storage means for storing pre-calculated optical transmission link information in association with the identified network connections may be provided. The system may further comprise processing means for establishing a link-based cost-of-change metric for each potential transmission request related to a certain network connection, the link-based cost-of change metric being indicative for the resource utilization in the optical data transmission network caused by the respective transmission request and the currently established optical transmission links. Processing means adapted to accumulate the link-based cost-of-change metric in order to obtain a node-based cost-of-change metric, said node-based cost-of-change metric being indicative for the load of the optical nodes of the optical data transmission network and an interface for providing load information, said load information being based on the node-based cost-of-change metric and indicating the load of the nodes of the optical data transmission network based on all potential transmission requests may be provided.

The above system or device may be implemented in an optical data transmission network, for example in a single network node, a group of at least 2 network nodes, a distributed system of cooperating nodes, a cloud computing environment, or any other realization capable of implementing the interface(s), storing means and processing means. The processing means may be implemented by a network processor or any other programmable computing device, e.g. as a CPU or controller, which may be connected to storage means for storing program instructions that cause, when executed by the computing device, the device to perform the above described method steps.

According to another aspect, computer program means, computer readable media or a computer program product are provided, which include computer readable instructions for causing a computing means to perform a method as described above, or operate as the system as described above.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Further, if not explicitly indicated otherwise, embodiments of the invention can be freely combined with each other.

The invention is explained below in an exemplary manner with reference to the accompanying drawings, wherein
- Fig. 1: schematically illustrates an example functional block diagram of a control plane of an optical data transmission system;
- Fig. 2: schematically illustrates a block diagram of a software defined network (SDN) environment including preemptive path calculation and analysis functionality;
- Fig. 3: schematically illustrates a flow chart of an example process for providing load information;
- Fig. 4: schematically illustrates a flow chart showing the process of pre-calculating optical transmission link information;
- Fig. 5: schematically illustrates a geographic map including multiple network nodes and already established transmission links between network nodes;
- Fig. 6: schematically illustrates a flow chart showing the process of establishing the link-based cost-of-change metric based on the identified network connections and the pre-calculated transmission link information;
- Fig. 7: schematically illustrates a geographic map including multiple network nodes and transmission path sections between network nodes, said transmission path sections being associated with load information (indicated by the respective numbers); and
- Fig. 8: schematically illustrates a geographic map including multiple network nodes, each node being associated with load information derived by a node-based cost-of-change metric.

In a broad sense, the method for providing load information comprises two phases, namely a first phase of pre-calculating transmission links for all potential transmission requests and a second phase of elaborated data preparation and preemptive analysis of pre-calculated transmission links.

In the first phase, for each potential transmission request to the network, a pre-calculation will be done. This calculation is based on the current state of the network. The resulting transmission paths are stored in a database, for example, a label switched path database (LSP-DB), and can be implemented later very fast in the network on-demand. Because the paths are already calculated in advance, the path information needs to be read only from database in case of arrival of a subsequent respective transmission request. The preemptive path calculation may require a lot of processing power, but this can be provided easily by using idle CPUs of a computing cloud. The path calculation can be done in parallel on different CPUs, because the resulting paths are independent from each other. In an optical network there are usually only a few capacity classes in use at the same time (e.g. or 2.5 Gb/s and 10 Gb/s, 10 Gb/s and 100 Gb/s). For each capacity class, the pre-calculation of the paths can be carried out.

In the second phase, the pre-calculated paths obtained by the first phase will be used for the determination of a new metric, the Cost of Change (COC) metric. This metric indicates how costly (in terms of resource utilization or service rerouting) the realization of a light path demand will be given the current state of the deployed network. The COC metric is computed for each potential demand. Then, the COC is accumulated to the network nodes and may be presented to the operator of the network (e.g. in a geographical map). In an extended usage, the metric is propagated to the packet layer as a routing metric to automatically avoid capacity bottlenecks. In the present disclosure, the term "preemptive" is used to describe the preventive or foresighted outcomes of an analysis. The means to accomplish these outcomes is to pre-calculate light paths. The term "pre-calculated" represents path routes which have been calculated in advance.

In the present document the term "optical transmission link" refers to the optical connection (logical link) between a starting network node and end network node via which the optical information is transmitted. An optical transmission link may span over one or more intermediate nodes which are arranged between the starting node and end node. The link segments between adjacent nodes are referred to as optical transmission link sections.

The term "optical transmission path" as used in the present disclosure refers to the transmission route which is chosen for transmitting the optical signal of the respective optical transmission link.

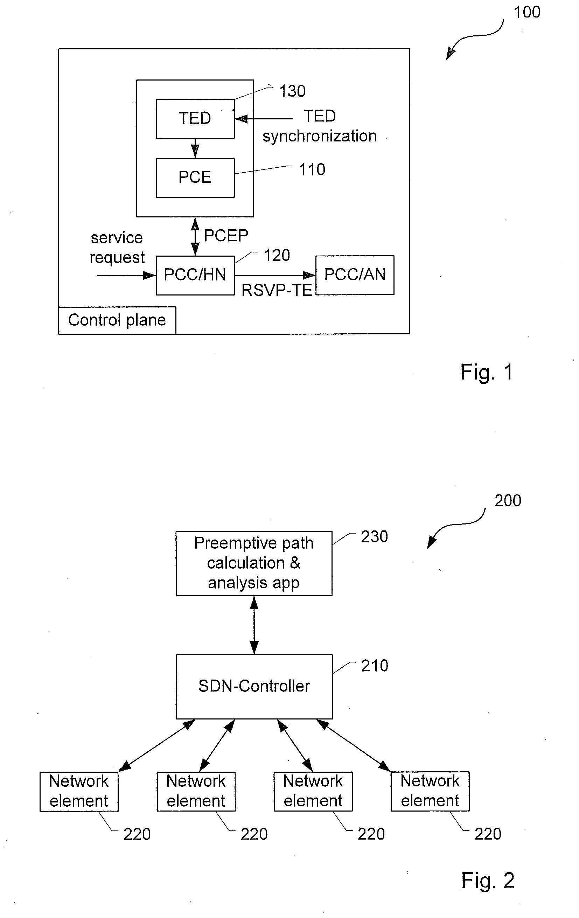

Fig. 1 schematically illustrates a functional block diagram of a control plane 100 of an optical data transmission system. In Multiprotocol Label Switching (MPLS) and Generalized Multiprotocol Label Switching (GMPLS) Networks, there exists the concept of using a path computation element (PCE, IETF RFC 4655) 110. In such configuration, within the control plane 100, an incoming connection demand (service request) will be processed by a PCE 110, which performs the path computation on-demand. The path computation can be controlled by the path computation client (PCC) 120 using several constraints (e.g. using Path Computation Element Communication Protocol, PCEP). The information required for path computation (network topology and resource utilization) is provided to the PCE 110 from a traffic engineering data base (TED 130, potentially extended by a label switched path data base, LSP-DB). The PCE 110 starts a CPU intensive path computation after arrival of a path request. It interacts with the TED 130 and delivers as a result a feasible path or no path.

Fig. 2 shows a software defined network (SDN) environment 200 including preemptive path calculation and analysis functionality. Software-defined networking in optical data transmission systems is an approach that allows network administrators to manage optical network services through abstraction of lower-level functionality. This is done by decoupling the system that makes decisions about where optical data is sent (the control plane) from the underlying network resources (switches, cross connects etc.) that forward optical data to the selected destination (the transmission plane).

SDN is a network architecture where network control is programmable and decoupled from traffic forwarding. The migration of control into accessible computing devices enables the underlying infrastructure to be abstracted for applications and network services which can treat the network as a logical or virtual entity. Network intelligence is logically centralized in software-based controllers. The network appears to the applications as a single logical switch.

In other words, SDN provides access to network resources and network status information at the right level of abstraction and thus supports the virtualization and automated operation of optical transport networks. Using SDN, the complexity to gain information to build a traffic engineering database and LSP database (TED, LSP-DB) is noticeably reduced, compared to state-of-the-art distributed control network architectures, e.g. GMPLS.

As shown in Fig. 2, the SDN environment 200 comprises a SDN controller 210 which is coupled with multiple network elements 220. Said network elements 220 may perform a setup, rerouting and/or shut down of an optical link based on control information provided by the SDN controller 210. In combination with the programmability of the network, all involved network resources (network elements 220) can be managed via said unified SDN controller 210, directed by user or operator applications. Applications (according to the present example, a preemptive path calculation and analysis application 230) can control, via standardized application programming interfaces (northbound interface between SDN controller 210 and preemptive path calculation and analysis unit 230 in Fig. 2), the centralized SDN controller 210 which itself is communicating with the underlying hardware (e.g. network elements 220) via a respective interfaces (southbound interfaces between SDN controller 210 and network elements 220 in Fig. 2).

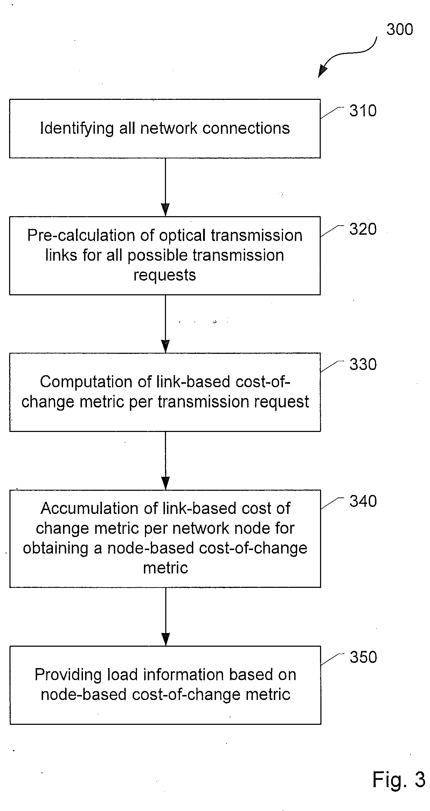

Fig. 3 shows a basic flow chart of a method 300 for providing load information of an optical data transmission system. In a first step, all network connections are identified, for which a potential transmission request may be received (310). The optical transmission network, in which the disclosed method should be performed, may comprise a plurality of network nodes interconnected by optical fiber links in order to transmit optical data. Starting from an actual network configuration (comprising a plurality of established optical transmission links), from each network node to each further network node, potential (hypothetical) transmission requests may be considered. In other words, a full-meshed transmission request matrix of potential future transmission link demands may be created.

In a further step, for each potential transmission request, an optical transmission link may be pre-calculated (320). "Pre-calculated" in the present context means that there is no real transmission request received, but an optical transmission link is calculated in advance based on the hypothetical assumption that such transmission request may be received in future and - based on the current network configuration - said transmission request has to be satisfied by establishing a respective transmission link from the source node to the destination node of the transmission request.

After pre-calculating all potential transmission requests, a computation of link-based cost-of-change metric for each transmission request may be performed (330). Link-based cost-of-change metric in the present context means that for each potential transmission request, a parameter is established which is indicative of the costs of realizing a transmission link satisfying said transmission request in the present state of the optical data transmission system (e.g. considering the network topology and the already established transmission links). More specifically, the cost-of-change metric may indicate the quantity of resources needed for establishing the transmission link. Additionally, the cost-of-change metric may be indicative for the resources required for re-routing an already established transmission link in order to provide the resources for a dynamic transmission request.

In a further step, a node-based cost-of-change metric may be developed by accumulating cost-of-change values of the link-based cost-of-change metric per network node (340). In other words, the link-based cost-of-change metric is transformed into a node-based cost-of-change metric indicating the load of the individual network nodes, and similarly, the costs (in terms of resource utilization and service rerouting) of realization of incoming dynamic transmission requests.

Finally, load information is provided at an interface (350), said load information being associated with the developed node-based cost-of-change metric. Said interface may be a graphical user interface of a network operator in order to allow the operator to assess the state of the network and enable said network operator to implement new-arriving transmission requests in the optical network based on said load information. According to another embodiment, the load information may be used in the SDN environment to automatically process transmission requests based on the load information and/or the pre-calculated optical transmission link information. Thus, the load information /pre-calculated optical transmission link information may be provided to the SDN controller in order to perform a configuration of network elements based on said information.

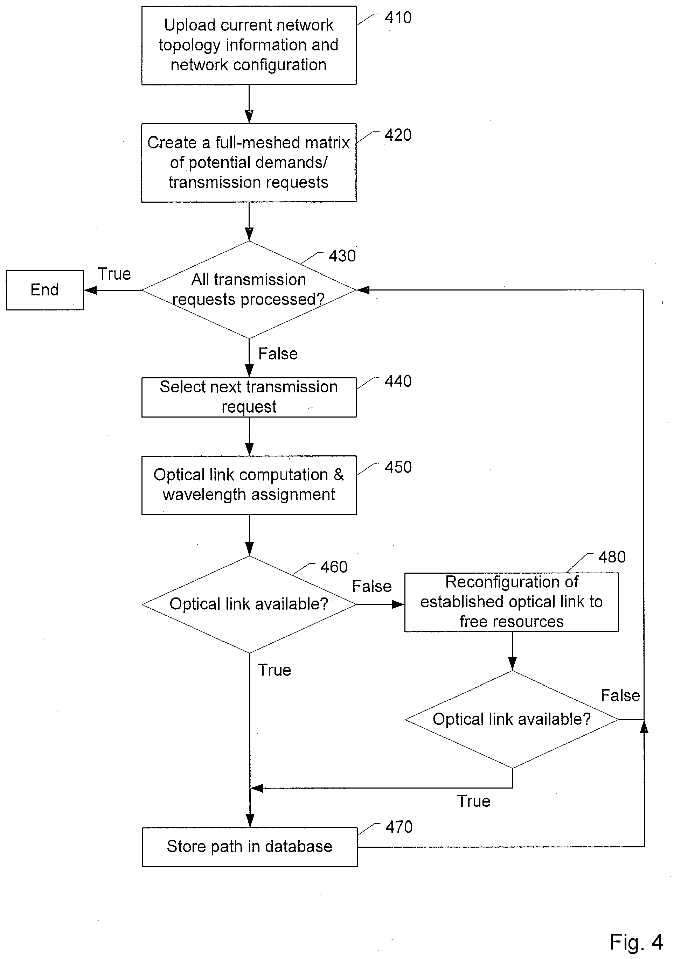

Fig. 4 illustrates method steps for pre-calculating optical transmission link information as a basis for creating the cost-of-change metric in closer detail. First, information regarding the current network topology and current network configuration is received or uploaded (410). In a SDN environment, said information may be provided by an SDN controller. However, the present invention is not limited to SDN environments but may also be performed in the state of the art distributed control network architecture, for example, a Generalized Multi-Protocol Label Switching (GMPLS) architecture. Therefore, said information may be received by or uploaded to any entity or system capable of performing said optical transmission link pre-calculation. The current network topology and current network configuration information may include (but is not limited to) information regarding the network nodes, their related ports, the physical links with their attributes and the already established transmission links including their routes and wavelengths (e.g. wavelengths according to a WDM grid) used for transmitting optical data. It is worth mentioning that said information regarding the network topology and/or network configuration may be time-variant information, i.e. the information may change over time. Therefore, the method may be performed iteratively, preferably each time the network configuration or network topology is changing in order to update the cost-of-change metric and the load information.

After receiving information regarding the current state of the optical data transmission network, all network connections are identified for which a potential transmission request may be received (420). Potential transmission requests could be received for implementing transmission links between each source - destination network node pair included in the optical data transmission network. Said potential transmission requests may be stored or buffered in order to calculate optical transmission link information in advance. For example, a full-meshed matrix of all potential transmission requests may be created and stored.

In case that different transmission capacities are available within the optical transmission network (e.g. 2.5 Gb/s, 10 Gb/s, 100 Gb/s), for each capacity class, all possible network connections may be identified for which potential transmission request may be received. Said explored network connections may be stored or buffered in a data storage in association with a capacity class indicator.

After determining all potential transmission requests, for each transmission request, optical transmission link information may be pre-calculated. So, in contrary to state of the art, the processing of a transmission request is not performed just-in-time when said transmission request is received for realizing a certain transmission link but is calculated in advance. The calculation of information regarding the optical transmission links can be performed in parallel, e.g. by using processing power provided by a data center or cloud environment, because the resulting optical transmission paths, in the following also referred to as optical transmission routes are independent from each other. In another embodiment, available processing power included in the optical network nodes of the optical data transmission system may be used for pre-calculating the optical transmission link information.

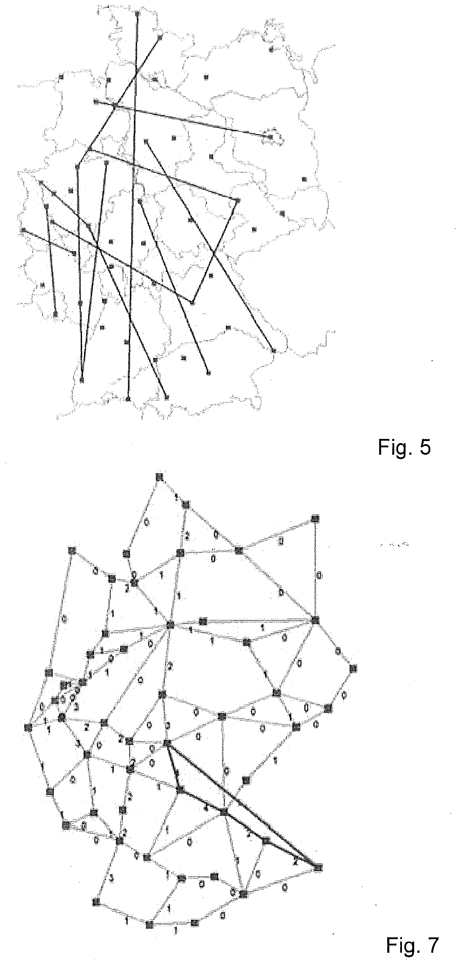

As shown in Fig. 4, based on the current network state, the optical transmission link information is calculated in a loop over all potential transmission requests. For example, Fig. 5 shows the regional distribution of optical network nodes in Germany and deployed optical transmission links between said optical network nodes. After determining that a further potential transmission request has to be processed (430), the next potential transmission request is selected (440). For said potential transmission request, an optical transmission link is determined based on a path routing algorithm, specifically a path routing algorithm which provides the shortest optical transmission path (450). In addition, for the selected transmission request, a wavelength is determined based on which optical data is transmitted through the optical transmission link. The wavelength may be determined based on a wavelength assignment (WLA) procedure, for example by using a first fit (first free wavelength found) or best fit (free wavelength causing the lowest costs or minimal effort) wavelength assignment procedure.

If an optical link has been found capable of handling the transmission request (460), pre-calculated optical transmission link information is stored (470), for example, in a database in order to have these information available in case of an actual occurrence of such dynamic transmission request (i.e. pre-calculated transmission link information can be used for implementing the optical transmission link). Specifically, information regarding the optical path (e.g. routing information) and the optical wavelength assignment to said transmission request may be stored.

If the routing of a potential transmission request failed due to limited network resources, reconfiguration of already established optical transmission links is investigated to make such resources available (480). In other words, the existing transmission link configuration may be changed in order to be able to establish an optical transmission link as demanded by the present dynamic transmission request.

With respect to a suitable reconfiguration algorithm, reference is made to the European Patent Application comprising application number EP14305727.1 which is hereby incorporated by reference.

Specifically, an example for a routing algorithm comprises the steps of
- detecting a demand for connecting a first network node of a predetermined first network part of an optical transport network and a second network node of a predetermined second network part of said optical transport network;
- searching in predetermined network topology information a first connection characterized by:
   - a resource allocated for said first connection to connect said predetermined first network part of said optical network to said predetermined second network part of said optical network, and
   - either another resource allocated for said first connection to connect said first network part and said second network part of said optical network or two other resources allocated for said first connection to connect said first network part and said second network part of said optical network to a predetermined third network part of said optical network respectively; and
- rerouting said first connection.

Preferably, the reconfiguration algorithm may be implemented according to the embodiment described in conjunction with Fig. 17 in the European Patent Application EP14305727.1.

In case that a re-routing is necessary, also information regarding the transmission link which has to be re-routed and information regarding the transmission link obtained by means of said re-routing algorithm may be stored in the database. Finally, also in case that the re-routing algorithm indicates that no re-routing of the existing transmission link is possible, and therefore the potential transmission request is blocked, information regarding that the respective transmission request cannot be accommodated is stored in the database. It is worth mentioning that said pre-calculated optical transmission link information, information regarding a potential rerouting and/or information that a certain transmission request cannot be handled at all may be stored in association with said transmission request in order to be able to retrieve said information in case that such transmission request is received.

The loop in Fig. 4 from step 470 to step 430 is processed until all transmission requests have been processed.

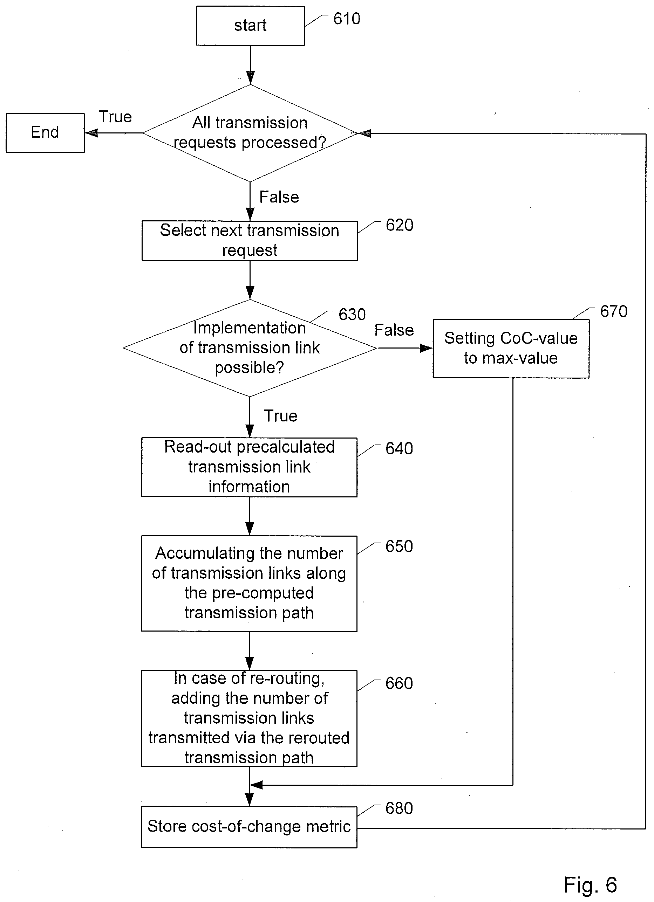

Fig. 6 shows an example schematic flow chart for calculating a link-based cost-of-change metric which is processed for each identified potential transmission request. After starting the routine for determining link-based cost-of-change metric (610), a transmission request stored in the database is selected (620). In the following, it is examined whether transmission link information has been pre-computed for said transmission request, i.e. if a transmission capacity for said transmission request is available (630).

If transmission link information is available, said transmission link information is read out of the database (640). In the following, the number of optical channels transmitted along the route of the pre-calculated optical transmission link is summed up or accumulated in order to establish the link-based cost-of-change metric (650). More in detail, the pre-calculated optical transmission link may comprise multiple transmission link sections which form the optical transmission path. In each transmission link section, one or more optical channels (e.g. WDM-channels) may be transmitted. An optical channel of said optical channels may be either an optical channel which may be allocated for establishing the potential transmission request or may be an already deployed optical channel (associated with an already established transmission link).

If a rerouting of already established optical transmission links has been necessary in order to create resources for the potential transmission request, the link-based cost-of-change metric is the sum of the number of optical channels transmitted along the route of the pre-calculated optical transmission link and the number of optical channels transmitted along the rerouted optical transmission path. In other words, in case of a rerouting, not only the resources (e.g. optical channels) used along the optical transmission path which handles the potential transmission request but also the resources used along the optical transmission path through which the rerouted transmission link is provided, are accumulated (660). By means of said accumulation, a cost-of-change value for the considered transmission request is obtained.

Fig. 7 shows an example schematic representation of an optical transmission network comprising multiple transmission link sections, each transmission link section coupling a pair of network nodes. An optical transmission link may be provided along an optical transmission path (transmission route) which may comprise one or more transmission link sections. Each transmission link section of Fig. 7 is associated with a number, said number indicating the number of occupied optical channels in the respective transmission link section.

The bold line shows a pre-calculated optical transmission link for which a potential transmission request would have been received. The numbers associated with the transmission link sections of the pre-calculated transmission link indicate the number of occupied optical channels which include the number of already established optical channels and one or more optical channels allocated to the pre-calculated optical transmission link. So according to the present example, the cost-of-change value obtained by the link-based cost-of- change metric is 4+4+2+2 = 12 (considering the case that no re-routing has been performed). So, in a broad sense, the link-based cost-of- change metric is higher for longer optical transmission paths and optical transmission paths using high utilized links.

In case that the database provides information that there are no network resources available for transmitting data according to a certain transmission request, the cost-of- change value associated with said transmission request is set to a predefined maximum value in order to mark such transmission request (670).

Finally, the cost-of- change value determined for each potential transmission request is stored in the database (680). Said loop is processed until a cost-of-change value for all potential transmission requests has been established.

Based on said cost-of-change values, a node-based cost-of-change metric is established. For establishing the node-based cost-of-change metric, the cost-of-change values of all potential transmission requests are considered. More in detail, the link-based cost-of-change metric is accumulated in each network node (which is usually the location of the optical switch, cross-connect etc.). For example, the cost-of-change values of all potential transmission requests, which have a certain node as a source or destination node, may be accumulated and stored in the database. Thereby, node-based cost-of-change values are obtained which are indicative for the load of the network nodes in case of occurring dynamic transmission demands.

Establishing the node-based cost-of-change values can be performed with an equal weight, i.e. each potential transmission request is taken into account uniformly. However, it may also be possible to accumulate the link-based cost-of-change metric by using a weighting factor, e.g. a weighting factor in the range of 0 and 1. For example, said weighting factor may indicate the frequency of occurrence of a transmission request for a certain optical transmission link. Thereby, optical transmission links which are frequently used for dynamic data transmissions are associated with a higher weighting factor than optical transmission links less frequently requested for dynamic data transmissions.

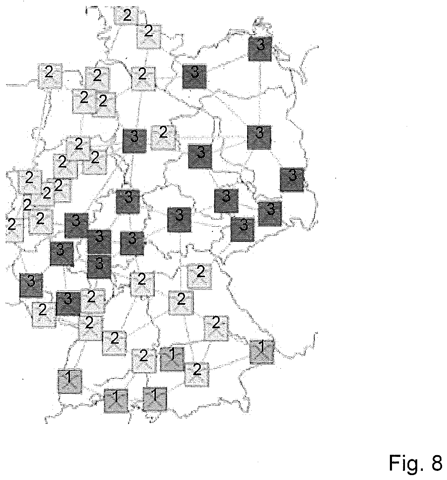

Fig. 8 shows a graphical representation of the node-based cost-of-change values. In this embodiment the cost-of-change values associated with the respective nodes have been classified into three classes, indicated by the numbers 1 to 3. A demand is associated with number 3, if its cost-of-change value is smaller than 1/3 of the maximum reached cost-of-change value. It is associated with number 2, if its cost-of-change value is smaller than 2/3 of the maximum reached cost-of-change value and it is associated with number 1, if its cost-of-change value is equal or greater than 2/3 of the maximum reached cost-of-change value. It is worth mentioning that the chosen graphical representation is only one of multiple possible graphical representations. Thus, also other graphical representations, e.g. representations using colors may be possible.

The graphical representation of the node-based cost-of-change values may be one example embodiment of providing load information based on the derived node-based cost-of-change metric. For example, the load information may be presented to an operator of the optical transmission network at a graphical user interface, e.g. showing a graphical map of the network including the load information. The load information may indicate how costly the implementation of a potential demanded optical transmission link will be in the current state of the optical network. For example, the graphical representation of Fig. 8 shows that according to the current network node, the implementation of a dynamic optical transmission link on the South-North route will be costly (with respect to system resources), whereas a dynamic optical transmission link between the middle and the North will be quite cheap (with respect to system resources).

In a preferred embodiment, the application providing said path pre-calculation / load information is included in an SDN environment. For example, the application may be registered at the SDN controller, i.e. may interact with said SDN controller. For example, the application may receive notifications about changes within the optical network (e.g. disabling of transmission links, received transmission requests, changes of the network topology etc.).In case of such changes within the optical network, a restart of the method for providing load information may be triggered in order to derive updated cost-of-change information. In other words, the process of preemptive path calculation and provision of cost-of-change metric may be triggered by the SDN controller in order to adapt the information derived by the path pre-calculation and the load information to the current state of the optical network.

Additionally, the SDN controller may receive information regarding the pre-calculated paths from the pre-emptive path calculation application. For example, in case of an arriving transmission request for a certain optical transmission link the application may perform a look up in its database and may provide quickly the pre-calculated path to the SDN controller. In addition, the SDN controller may use the load information provided by the application in order to avoid capacity bottlenecks. For example, the established cost-of-change metric may be used in the packet layer as a routing metric to avoid capacity bottlenecks.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the explicit use of the term "processor" or "computer" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random-access memory (RAM), and non-volatile storage. Other hardware, conventional and/or custom, may also be included.

## Claims

1. Method for providing load information of an optical data transmission network, the method comprising the steps of:
- receiving information regarding the current state of the optical data transmission network including network topology information and information regarding currently established optical transmission links (410);
- identifying network connections (310) for which a potential transmission request may be received;
- pre-calculating, based on the information regarding the current state of the optical data transmission network, optical transmission link information for each identified network connection (320), said optical transmission link information including at least transmission path information;
- establishing, for each potential transmission request related to a certain network connection, a link-based cost-of-change metric (330), the link-based cost-of change metric being indicative for the resource utilization in the optical data transmission network caused by the respective transmission request and the currently established optical transmission links;
- accumulating (340) the established link-based cost-of-change metrics in order to obtain a node-based cost-of-change metric, said node-based cost-of-change metric being indicative for the load of the optical nodes of the optical data transmission network; and
- providing load information based on the node-based cost-of-change metric (350), said load information indicating the potential load of the nodes of the optical data transmission network based on the potential transmission requests.

2. Method according to claim 1, wherein the pre-calculation of optical transmission link information for each identified network connection is performed separately for each transmission class provided in the optical data transmission network.

3. Method according to anyone of the preceding claims, wherein the pre-calculation of optical transmission link information for each identified network connection determines the shortest optical transmission path for establishing the network connection.

4. Method according to anyone of the preceding claims, wherein the pre-calculation of optical transmission link information for each identified network connection is performed using a first-fit or best-fit wavelength assignment algorithm.

5. Method according to anyone of the preceding claims, wherein a reconfiguration of an already established optical transmission link is performed (480) if a pre-calculated optical transmission link is not available due to limited network resources.

6. Method according to claim 5, wherein information regarding the reconfiguration or rerouting of an already established optical transmission link is stored in association with the pre-calculated optical transmission link information.

7. Method according to anyone of the preceding claims, wherein information that no optical transmission link is available for a certain transmission request is stored in association with the identified network connection corresponding to said transmission request.

8. Method according to anyone of the preceding claims, wherein the link-based cost-of-change metric is established by summing up the number of optical transmission links transmitted in each optical transmission path section along the pre-calculated optical transmission path, thereby deriving a link-based cost-of-change value (650) for each optical transmission link.

9. Method according to claim 8, wherein the link-based cost-of-change metric is established by adding the number of optical transmission links transmitted in each optical transmission path section along the alternative transmission path to a link-based cost-of-change value (660), the alternative transmission path being the path through which an already established optical transmission link is rerouted.

10. Method according to claim 8 or 9, wherein the node-based cost-of-change metric associated with a certain node is derived by summing up the link-based cost-of-change values established for all potential transmission requests which have said node as source node or destination node.

11. Method according to anyone of the preceding claims, wherein the load information is provided as graphical information on a graphical user interface to an operator in order to support network planning.

12. Method according to anyone of the preceding claims, wherein the load information is provided to a network management entity in order to process transmission requests based on said load information.

13. Method according to anyone of the preceding claims, wherein the optical data transmission network is managed by a SDN controller (210), the method comprising storing said pre-calculated optical transmission link information, wherein the SDN controller (210) performs setting up a requested optical transmission link by using said stored pre-calculated optical transmission link information.

14. Method according to anyone of the preceding claims, wherein the optical data transmission network is managed by a SDN controller (210), wherein the SDN controller (210) triggers a recalculation of the load information in case that one or more optical transmission links provided within the optical data transmission network have changed.

15. System for providing load information of an optical data transmission network, the system comprising:
- an interface for receiving information regarding the current state of the optical data transmission network including network topology information and information regarding currently established optical transmission links;
- processing means for identifying network connections for which a potential transmission request may be received;
- processing means for pre-calculating, based on the information regarding the current state of the optical data transmission network, optical transmission link information for each identified network connection, said optical transmission link information at least including optical path information;
- processing means for establishing a link-based cost-of-change metric for each potential transmission request related to a certain network connection, the link-based cost-of change metric being indicative for the resource utilization in the optical data transmission network caused by the respective transmission request and the currently established optical transmission links;
- processing means adapted to accumulate the link-based cost-of-change metric in order to obtain a node-based cost-of-change metric, said node-based cost-of-change metric being indicative for the load of the optical nodes of the optical data transmission network; and
- an interface for providing load information, said load information being based on the node-based cost-of-change metric and indicating the potential load of the nodes of the optical data transmission network based on the potential transmission requests.

## Patentansprüche

1. Verfahren zum Bereitstellen von Lastinformation eines optischen Datenübertragungsnetzwerks, wobei das Verfahren die Schritte umfasst:
- Empfangen von Informationen betreffend den aktuellen Zustand des optischen Datenübertragungsnetzwerks, einschließlich Informationen über die Netzwerktopologie und Informationen betreffend die aktuell eingerichteten optischen Übertragungsstrecken (410);
- Identifizieren von Netzwerkverbindungen (310) für die eine potenzielle Übertragungsanfrage empfangen werden kann;
- Vorberechnen, beruhend auf der Information betreffend den aktuellen Zustand des optischen Datenübertragungsnetzwerks, von der optischen Übertragungsstreckeninformation für jede identifizierte Netzwerkverbindung (320), wobei besagte optische Übertragungsstreckeninformation mindestens Übertragungspfadinformation beinhaltet;
- Erstellen, für jede potenzielle Übertragungsanfrage, die sich auf eine bestimmte Netzwerkverbindung bezieht, einer link-basierten Änderungskosten-Metrik (330), wobei die link-basierte Änderungskosten-Metrik indikativ ist für die Ressourcennutzung in dem optischen Datenübertragungsnetzwerk, die durch die jeweilige Übertragungsanfrage und die aktuell eingerichteten Übertragungsstrecken verursacht wird;
- Akkumulieren (340) der eingerichteten link-basierten Änderungskosten-Metriken, um eine knoten-basierte Änderungskosten-Metrik zu erhalten, wobei besagte knoten-basierte Änderungskosten-Metrik indikativ ist für die Auslastung der optischen Knoten des optischen Datenübertragungsnetzwerks; und
- Bereitstellen von Lastinformation beruhend auf der Knoten-basierten Änderungskosten-Metrik (350), wobei besagte Lastinformation die potenzielle Auslastung der Knoten des optischen Datenübertragungsnetzwerks beruhend auf den potenziellen Übertragungsanfragen anzeigt.

2. Verfahren nach Anspruch 1, wobei die Vorberechnung der optischen Übertragungsstreckeninformation für jede identifizierte Netzwerkverbindung für jede im optischen Datenübertragungsnetzwerk bereitgestellte Übertragungsklasse getrennt durchgeführt wird.

3. Verfahren nach einem beliebigen der vorstehenden Ansprüche, wobei die Vorberechnung der optischen Übertragungsstreckeninformation für jede identifizierte Netzwerkverbindung den kürzesten optischen Übertragungspfad für das Einrichten der Netzwerkverbindung bestimmt.

4. Verfahren nach einem beliebigen der vorstehenden Ansprüche, wobei die Vorberechnung der optischen Übertragungsstreckeninformation für jede identifizierte Netzwerkverbindung durchgeführt wird unter Verwendung eines zuerst passenden oder am besten passenden Wellenlängenzuweisungsalgorithmus.

5. Verfahren nach einem beliebigen der vorstehenden Ansprüche, wobei die Rekonfiguration einer bereits eingerichteten optischen Übertragungsstrecke durchgeführt (480) wird, wenn eine vorberechnete optische Übertragungsstrecke aufgrund von begrenzten Netzwerkressourcen nicht verfügbar ist.

6. Verfahren nach Anspruch 5, wobei die Information betreffend die Rekonfiguration oder das Umleiten einer bereits eingerichteten optischen Übertragungsstrecke in Verbindung mit der vorberechneten optischen Übertragungsstreckeninformation gespeichert wird.

7. Verfahren nach einem beliebigen der vorstehenden Ansprüche, wobei die Information, dass keine optische Übertragungsstrecke für eine bestimmte Übertragungsanfrage verfügbar ist, in Verbindung mit der identifizierten Netzwerkverbindung gespeichert wird, die besagter Übertragungsanfrage entspricht.

8. Verfahren nach einem beliebigen der vorstehenden Ansprüche, wobei die link-basierte Änderungskosten-Metrik erstellt wird durch das Aufsummieren der Anzahl der in jedem optischen Übertragungspfadabschnitt entlang des vorberechneten optischen Übertragungspfades übertragenen optischen Übertragungsstrecken, wodurch für jede optische Übertragungsstrecke ein link-basierter Änderungskostenwert (650) abgeleitet wird.

9. Verfahren nach Anspruch 8, wobei die link-basierte Änderungskosten-Metrik erstellt wird durch das Addieren der Anzahl von optischen Übertragungsstrecken, die in jedem optischen Übertragungspfadabschnitt entlang des alternativen Übertragungspfades zu einem Änderungskostenwert (660) übertragenen werden, wobei der alternative Übertragungspfad der Pfad ist, über den eine bereits eingerichtete optische Übertragungsstrecke umgeleitet wird.

10. Verfahren nach Anspruch 8 oder 9, wobei die knoten-basierte Änderungskosten-Metrik, die zugehörig ist zu einem bestimmten Knoten, abgeleitet wird durch das Aufsummieren der link-basierten Änderungskostenwerte, die für alle potenziellen Übertragungsanfragen erstellt werden, welche besagten Knoten als Quellknoten oder Zielknoten aufweisen.

11. Verfahren nach einem beliebigen der vorstehenden Ansprüche, wobei die Lastinformation als eine grafische Information auf einer grafischen Benutzerschnittstelle an einen Betreiber bereitgestellt wird, um die Netzwerkplanung zu unterstützen.

12. Verfahren nach einem beliebigen der vorstehenden Ansprüche, wobei die Lastinformation einer Netzwerkverwaltungsentität bereitgestellt wird, um die Übertragungsanfragen beruhend auf besagter Lastinformation zu verarbeiten.

13. Verfahren nach einem beliebigen der vorstehenden Ansprüche, wobei das optische Datenübertragungsnetzwerk verwaltet wird durch einen SDN-Controller (210), wobei das Verfahren das Speichern von besagter vorberechneter optischen Übertragungsstreckeninformation umfasst, wobei der SDN-Controller (210) das Aufbauen einer angeforderten optischen Übertragungsstrecke unter Verwendung von besagter gespeicherter vorberechneter optischen Übertragungsstreckeninformation ausführt.

14. Verfahren nach einem beliebigen der vorstehenden Ansprüche, wobei das optische Datenübertragungsnetzwerk verwaltet wird durch einen SDN-Controller (210), wobei der SDN-Controller (210) eine Neuberechnung der Lastinformation auslöst, falls sich eine oder mehrere innerhalb des optischen Datenübertragungsnetzwerks bereitgestellten optischen Übertragungsstrecken geändert haben.

15. System zum Bereitstellen von Lastinformation eines optischen Datenübertragungsnetzwerks, wobei das System umfasst:
- eine Schnittstelle zum Empfangen von Information betreffend den aktuellen Zustand des optischen Datenübertragungsnetzwerks, einschließlich Information über die Netzwerktopologie und Information betreffend die aktuell eingerichteten optischen Übertragungsstrecken;
- Verarbeitungsmittel zum Identifizieren von Netzwerkverbindungen für die eine potenzielle Übertragungsanfrage empfangen werden kann;
- Verarbeitungsmittel zum Vorberechnen, beruhend auf der Information betreffend den aktuellen Zustand des optischen Datenübertragungsnetzwerks, auf der optischen Übertragungsstreckeninformation für jede identifizierte Netzwerkverbindung, wobei besagte optische Übertragungsstreckeninformation mindestens optische Pfadinformation beinhaltet;
- Verarbeitungsmittel zum Erstellen einer link-basierten Änderungskosten-Metrik für jede potenzielle Übertragungsanfrage, die sich auf eine bestimmte Netzwerkverbindung bezieht, wobei die link-basierte Änderungskosten-Metrik indikativ ist für die Ressourcennutzung in dem optischen Datenübertragungsnetzwerk, die durch die jeweilige Übertragungsanfrage und die aktuell eingerichteten Übertragungsstrecken verursacht wird;
- Verarbeitungsmittel, die angepasst sind zum Akkumulieren der link-basierten Änderungskosten-Metrik, um eine knoten-basierte Änderungskosten-Metrik zu erhalten, wobei besagte knoten-basierte Änderungskosten-Metrik indikativ ist für die Auslastung der optischen Knoten des optischen Datenübertragungsnetzwerks; und
- eine Schnittstelle zum Bereitstellen von Lastinformation, wobei besagte Lastinformation beruht auf der Knoten-basierten Änderungskosten-Metrik und die potenzielle Auslastung der Knoten des optischen Datenübertragungsnetzwerks beruhend auf den potenziellen Übertragungsanfragen anzeigt.

## Revendications

1. Procédé de fourniture d'informations de charge d'un réseau de transmission de données optiques, le procédé comprenant les étapes suivantes :
- recevoir des informations concernant l'état actuel du réseau de transmission de données optiques comprenant des informations de topologie de réseau et des informations concernant des liaisons de transmission optique actuellement établies (410) ;
- identifier des connexions au réseau (310) pour lesquelles une demande de transmission potentielle peut être reçue ;
- pré-calculer, sur la base des informations concernant l'état actuel du réseau de transmission de données optiques, des informations de liaison de transmission optique pour chaque connexion au réseau identifiée (320), lesdites informations de liaison de transmission optique comprenant au moins des informations de trajet de transmission ;
- établir, pour chaque demande de transmission potentielle relative à une certaine connexion au réseau, une mesure du coût de changement basée sur la liaison (330), la mesure du coût de changement basée sur la liaison indiquant l'utilisation de ressources dans le réseau de transmission de données optiques due à la demande de transmission respective et aux liaisons de transmission optique actuellement établies ;
- accumuler (340) les mesures du coût de changement basées sur la liaison établies afin d'obtenir une mesure du coût de changement basée sur le noeud, ladite mesure du coût de changement basée sur le noeud indiquant la charge des noeuds optiques du réseau de transmission de données optiques ; et
- fournir des informations de charge sur la base de la mesure du coût de changement basée sur le noeud (350), lesdites informations de charge indiquant la charge potentielle des noeuds du réseau de transmission de données optiques sur la base des demandes de transmission potentielles.

2. Procédé selon la revendication 1, dans lequel le pré-calcul des informations de liaison de transmission optique pour chaque connexion au réseau identifiée est effectué séparément pour chaque catégorie de transmission fournie dans le réseau de transmission de données optiques.

3. Procédé selon l'une quelconque des revendications précédentes, dans lequel le pré-calcul des informations de liaison de transmission optique pour chaque connexion au réseau identifiée détermine le trajet de transmission optique le plus court pour établir la connexion au réseau.

4. Procédé selon l'une quelconque des revendications précédentes, dans lequel le pré-calcul des informations de liaison de transmission optique pour chaque connexion au réseau identifiée est effectué en utilisant un algorithme d'assignation de longueur d'onde du premier ajustement ou du meilleur ajustement.

5. Procédé selon l'une quelconque des revendications précédentes, dans lequel une reconfiguration d'une liaison de transmission optique déjà établie est effectuée (480) si une liaison de transmission optique pré-calculée n'est pas disponible en raison de ressources de réseau limitées.

6. Procédé selon la revendication 5, dans lequel des informations concernant la reconfiguration ou le réacheminement d'une liaison de transmission optique déjà établie sont stockées en association avec les informations de liaison de transmission optique pré-calculée.

7. Procédé selon l'une quelconque des revendications précédentes, dans lequel des informations, selon lesquelles aucune liaison de transmission optique n'est disponible pour une certaine demande de transmission, sont stockées en association avec la connexion au réseau identifiée correspondant à ladite demande de transmission.

8. Procédé selon l'une quelconque des revendications précédentes, dans lequel la mesure du coût de changement basée sur la liaison est établie en additionnant le nombre de liaisons de transmission optique transmises dans chaque section de trajet de transmission optique le long du trajet de transmission optique pré-calculé, obtenant ainsi une valeur du coût de changement basée sur la liaison (650) pour chaque liaison de transmission optique.

9. Procédé selon la revendication 8, dans lequel la mesure du coût de changement basée sur la liaison est établie en additionnant le nombre de liaisons de transmission optique transmises dans chaque section de trajet de transmission optique le long du trajet de transmission alternatif à une valeur du coût de changement basée sur la liaison (660), le trajet de transmission alternatif étant le trajet à travers lequel une liaison de transmission optique déjà établie est réacheminée.

10. Procédé selon la revendication 8 ou 9, dans lequel la mesure du coût de changement basée sur le noeud associée à un certain noeud est obtenue en additionnant les valeurs du coût de changement basées sur la liaison établies pour toutes les demandes de transmission potentielles qui ont ledit noeud en tant que noeud source ou noeud de destination.

11. Procédé selon l'une quelconque des revendications précédentes, dans lequel les informations de charge sont fournies en tant qu'informations graphiques sur une interface utilisateur graphique à un opérateur afin de prendre en charge une planification de réseau.

12. Procédé selon l'une quelconque des revendications précédentes, dans lequel les informations de charge sont fournies à une entité de gestion de réseau afin de traiter des demandes de transmission sur la base desdites informations de charge.

13. Procédé selon l'une quelconque des revendications précédentes, dans lequel le réseau de transmission de données optiques est géré par un contrôleur SDN (210), le procédé comprenant le stockage desdites informations de liaison de transmission optique pré-calculée, dans lequel le contrôleur SDN (210) établit une liaison de transmission optique demandée en utilisant lesdites informations de liaison de transmission optique pré-calculées stockées.

14. Procédé selon l'une quelconque des revendications précédentes, dans lequel le réseau de transmission de données optiques est géré par un contrôleur SDN (210), dans lequel le contrôleur SDN (210) déclenche un recalcul des informations de charge au cas où une ou plusieurs liaisons de transmission optique fournies dans le réseau de transmission de données optiques changerait/changeraient.

15. Système pour fournir des informations de charge d'un réseau de transmission de données optiques, le système comprenant :
- une interface pour recevoir des informations concernant l'état actuel du réseau de transmission de données optiques comprenant des informations de topologie de réseau et des informations concernant des liaisons de transmission optique actuellement établies ;
- des moyens de traitement pour identifier des connexions au réseau pour lesquelles une demande de transmission potentielle peut être reçue ;
- des moyens de traitement pour pré-calculer, sur la base des informations concernant l'état actuel du réseau de transmission de données optiques, des informations de liaison de transmission optique pour chaque connexion au réseau identifiée, lesdites informations de liaison de transmission optique comprenant au moins des informations de trajet optique ;
- des moyens de traitement pour établir une mesure du coût de changement basée sur la liaison pour chaque demande de transmission potentielle relative à une certaine connexion au réseau, la mesure du coût de changement basée sur la liaison indiquant l'utilisation de ressources dans le réseau de transmission de données optiques due à la demande de transmission respective et aux liaisons de transmission optique actuellement établies ;
- des moyens de traitement adaptés pour accumuler la mesure du coût de changement basée sur la liaison afin d'obtenir une mesure du coût de changement basée sur le noeud, ladite mesure du coût de changement basée sur le noeud indiquant la charge des noeuds optiques du réseau de transmission de données optiques ; et
- une interface pour fournir des informations de charge, lesdites informations de charge étant basées sur la mesure du coût de changement basée sur le noeud et indiquant la charge potentielle des noeuds du réseau de transmission de données optiques sur la base des demandes de transmission potentielles.
